# EUROPEAN PATENT APPLICATION

(11) **EP 3 115 285 A1**
(43) Date of publication of application: **11.01.2017**
(21) Application number: 15175369.6
(22) Date of filing: 05.07.2015
(51) Int. Cl.: B62J 6/02, B60Q 1/00, B60Q 1/14

(54) **INTELLIGENT LIGHT DEVICE FOR A VEHICLE**

(71) Applicant: Lee, Wen-Sung, Taichung City 40861 (TW)
(72) Inventor: Lee, Wen-Sung, Taichung City 40861 (TW)
(74) Representative: Cabinet Chaillot

(57) **Abstract**

An intelligent lighting device for a vehicle is disclosed and comprises a light body (1), a light collection unit (2), a lighting unit (3), and light focusing glass (4). An output current of the pulse-width modulation unit (24) is zero while the light collection unit (4) is collecting the ambient light brightness, even the lighting unit is (3) not lit, so that there is not any light brightness in the light body (1) and then the ambient light brightness of the light projection area (5) is accurately detected while the light collection unit (2) is collecting the ambient light brightness of the light projection area (5).

## Description

### BACKGROUND OF THE INVENTION

### 1. Field of the Invention

The present invention relates to an intelligent lighting device for a vehicle, and especially relates to a device capable for modulating (or adjusting) lighting brightness based on the ambient brightness of the light projection area, power saving, and more accurately modulating (or adjusting) lighting brightness.

### 2. Description of Related Art

Riding bicycle has been the most popular exercise. Besides exercising, it may prevent carbon dioxide from exhausting into and polluting the air and be easy to operate for women and men, and boys and girls. Therefore, many people may use their spare time to ride bicycle in open spaces.

However, some of people who loves riding must ride bicycle in the dark evening or night due to work. The sense of sight may be declined in the dark evening or night. Because many people do not ride in open spaces, the same road must be share with other people who ride motorcycle or drive automobile so that many traffic accidents are easily happened. Therefore, in order to clearly see the objects or people in front of the riders, riders may wear light reflecting device or lighting device to prevent from traffic accidents.

Please reference to TW patent no. 356790, which is disclosed a flashing alarm device for bicycle, especially relates to structure which may be automatically flashed and turned off while in parking or with sufficient lights. It mainly comprises an LED flash driving circuit. An output terminal of the driving circuit is electrically connected to an LED. A negative terminal of the LED is electrically connected to a light sensitive resistor (CDS) in series. A ground terminal of the light sensitive resistor is connected to a node of a clip-spring switch. The clip-spring switch is then electrically connected to ground. The effect of alarm may be achieved by the double activating control structure of light sensitive detection of the light sensitive resistor and conduction of the clip-spring switch due to the vibration of the bicycle.

Although the above mentioned light may be automatically flashed to alarm corresponding to the ambient brightness of light, actually, the light sensitive resistor may only detect the difference of the ambient brightness but not be restricted in a predetermined lighting range, especially for pedestrians or riders of motorcycle or bicycle. It is mainly lightening the rod in front of the pedestrians or riders in predetermined distance for seeing clearly. The light sensitive resistor may be not flexible judged while the lighting range in front of the pedestrians or riders and the brightness around the pedestrians or riders are different. The above mentioned light only has two modes of automatically turning on and off, but is may not fill and decrease lighting brightness corresponding to the ambient brightness. Therefore, there are many troubles are happened.

Firstly, the above mentioned light may not immediately fill lights to the lightening area (5-10 meters in front of the pedestrians or riders) and then they may be in danger.

Secondly, the power of the light may be wasted because it may not decrease the brightness corresponding to the ambient brightness of the light projection area (lighting area).

Thirdly, the light must arrange the batteries with higher capacity to keep or extend the life of the light because the light is based on the detection of the light sensitive resistor to turn on or off flash. In order to consider the cost of manufacture, the batteries with higher capacity have larger size so that the power of the batteries of the light are not effectively saved and the volume of the batteries is hard to be minimized in design.

In order to improve above drawbacks, a new lighting device capable for modulating (or adjusting) the brightness corresponding to the ambient brightness and saving power should be employed.

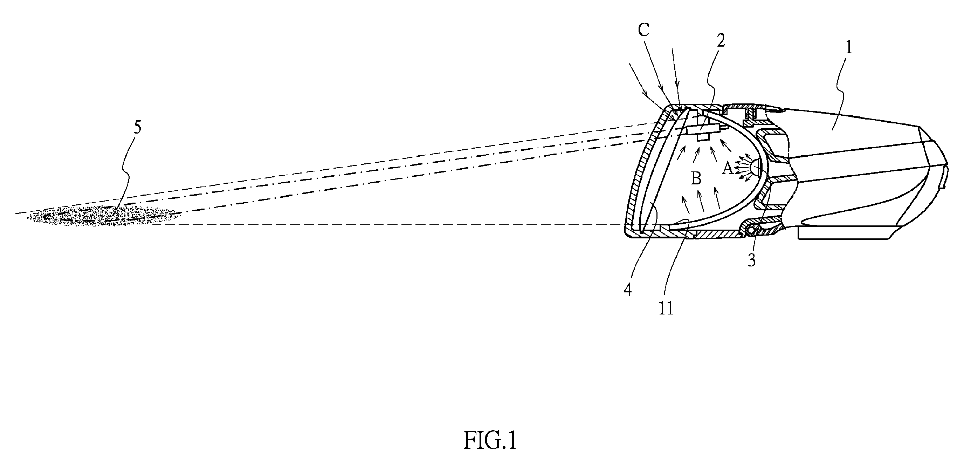

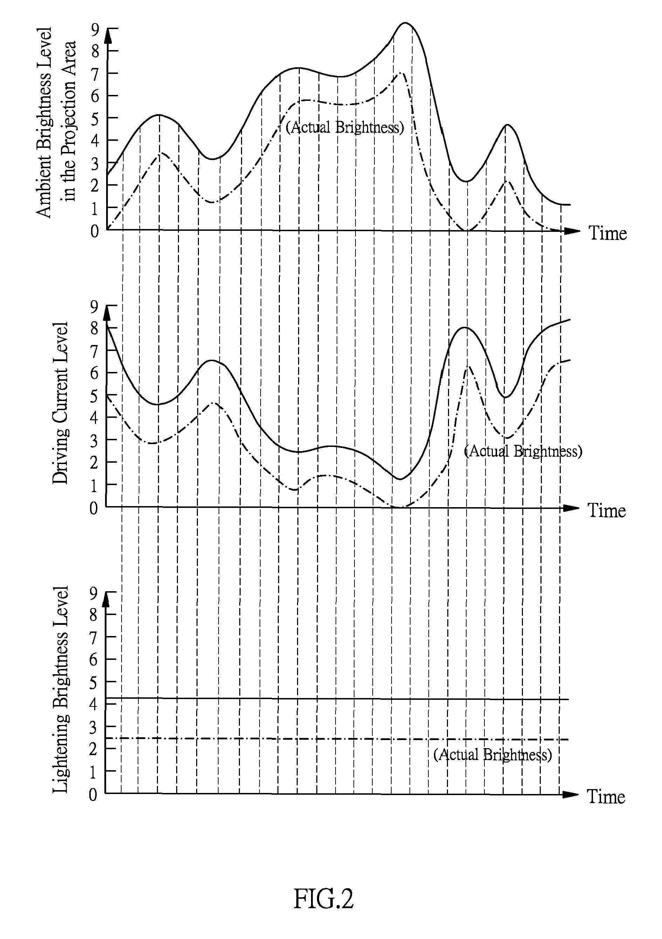

However, the new lighting device still has the drawback of insufficient precision because the light collection unit 2 is detecting the ambient brightness of the light projection area 5. Since the light collection unit 2 is arranged in the light body 1 (shown as in FIG. 1) and the reflecting cup 11 is arranged at the light body 1, the light collection unit 2 may receive the emitting light A emitted from the lightening unit 3 arranged in the light body 1, the reflecting light B reflected from the reflecting cup 11 and the light outside and around the light body 1 to influence the micro control unit to misjudge while the lightening unit 3 of the light body 1 is lightening. An error may be produced. That is, the light collection unit 2 may not accurately react to the ambient brightness of the light projection area 5 (shown as FIG. 2, the solid line refers to the brightness and current judged by the micro control unit, and the dash line refers to the actual brightness and current of the light projection area) so that the lights of the lightening unit may be filled insufficiently or over and the brightness may be lower or higher.

In view of the foregoing circumstances, the inventor has invested a lot of time to study the relevant knowledge, compare the pros and cons, research and develop related products. After quite many experiments and tests, the "intelligent lighting device for a vehicle" of this invention is eventually launched to improve the foregoing shortcomings, to meet the public use.

### SUMMARY OF THE IN VENTION

An object of this invention is providing an intelligent lighting device for a vehicle to improve the drawbacks of the prior art. The drawbacks are that the lights cannot fill and decrease lighting brightness corresponding to the ambient brightness of the light projection area and saving power.

In order to improve above mentioned drawbacks, an intelligent lighting device for a vehicle is provided. The intelligent lighting device may comprise a light body, a light collection unit, a lightening unit, and light focusing glass, wherein:
a concave reflection cup with an open end is arranged at a front end of the light body, the light focusing glass is arranged at the open end of the cup, the lightening unit is arranged at an inner wall of a rear end of the cup opposite to the open end, the light collection unit is disposed at the light body, a light projection area disposed at the front end of the light body is defined by cooperating with the lightening unit and the light focusing glass, and the light collection unit is faced to the light projection area and detected an ambient light brightness of the light projection area;
a micro control unit and a pulse-width modulation unit are further arranged at the light collection unit and electrically connected with one another, a difference of the ambient light brightness is calculated by comparing with a digital information received from the light collection unit and a predetermined ambient light brightness by the micro control unit and then the digital information is commanded to transmit to the pulse-width modulation unit and modulate to increase or decrease the light brightness of the lightening unit corresponding to the light projection area; and
an output current of the pulse-width modulation unit is zero while the light collection unit is collecting the ambient light brightness, even the lightening unit is not lightened, so that there is not any light brightness in the light body and then the ambient light brightness of the light projection area is accurately detected while the light collection unit is collecting the ambient light brightness of the light projection area.

In some embodiments, a differential amplifier and an analog-to-digital converter are further arranged at the light collection unit, the ambient light brightness of the light projection area is detected by the differential amplifier to transfer to a detecting information and transmitted to the analog-to-digital converter after the detecting information is amplified, the detecting information is converted from analog to digital by the analog-to-digital converter and transmitted to the micro control unit so that the difference of the ambient light brightness is calculated by comparing with the digital information received from the light collection unit and the predetermined ambient light brightness by the micro control unit and provided more accurate detection and calculation.

In some embodiments, a buffering unit is further arranged at the light collection unit, a predetermined buffer value is preset in the buffering unit, and the lightening unit is commanded not to modulate brightness through the micro control unit and the pulse-width modulation unit while a brightness modulation time of the light projection area detected by the light collection unit is smaller than the predetermined buffer value; and the brightness modulation time and the brightness are integrally calculated by the buffering unit and the micro control unit, and then the lightening unit is commanded to modulate to increase or decrease the brightness through the micro control unit and the pulse-width modulation unit while the brightness modulation time of the light projection area detected by the light collection unit is larger than the predetermined buffer value.

In some embodiments, the light collection unit is arranged at the reflection cup.

In some embodiments, the light collection unit may be a photosensitive semiconductor and may include the differential amplifier and the lightening unit to form an integral element with light emission, light receiving, and light signal amplifying.

The horizontal distance of the light projection area is 5-30 meter from the light body which is a distance is capable being recognized for a rider or driver and lighting to alarm for the light body with batteries to provide power saving.

In some embodiments, the light body may further include an adjusting unit which is electrically connected to the micro control unit and provides for manually adjusting the lightening effect of the lightening unit. The lightening unit may be manually adjusted brightness by users to provide more comfortable illuminating effect.

An intelligent lighting device for a vehicle is further disclosed. The intelligent lighting device comprises a light body, a light collection unit, a lightening unit, and light focusing glass, wherein:
a concave reflection cup with an open end is arranged at a front end of the light body, the light focusing glass is arranged at the open end of the cup, the lightening unit is arranged at an inner wall of a rear end of the cup opposite to the open end, the light collection unit is disposed at the light body, a light projection area disposed at the front end of the light body is defined by cooperating with the lightening unit and the light focusing glass, and the light collection unit is faced to the light projection area and detected an ambient light brightness of the light projection area; and
a gray-scale image processor and a micro control unit electrically connected with each other are arranged at the light collection unit so that an image of the light projection area is transferred to a gray-scale value for providing the micro control unit to judge a brightness or an image of the gray-scale value and further modulating a light brightness of the lightening unit.

The various objectives and advantages of the present invention will be more readily understood from the following detailed description when read in conjunction with the appended drawing.

### BRIEF DESCRIPTION OF THE DRAWINGS

FIG. 1 is a view of the prior art which the brightness of a conventional light collection unit arranged in a light body is influenced;
FIG. 2 is curve diagrams of the prior art referred to ambient brightness level in the projection area-time, driving current level-time, and lightening brightness level-time;
FIG. 3 is a cross-sectional view of an intelligent lighting device for a vehicle of the present invention (analog load of the PWM is zero);
FIG. 4 is a block diagram of the intelligent lighting device for a vehicle of the present invention;
FIG. 5 is a cross-sectional view of the intelligent lighting device for a vehicle of the present invention (analog load of the PWM is one);
FIG. 6 is curve diagrams of the intelligent lighting device for a vehicle of the present invention referred to ambient brightness level in the light projection area-time, driving current level-time, and lightening brightness level in the light projection area-time; and
FIG. 7 is a block diagram of another embodiment of the intelligent lighting device for a vehicle of the present invention.

### DETAILED DESCRIPTION OF THE INVENTION

To describe clearly that the present invention achieves the foregoing objective and function, the technical features and desired function are described with reference to a preferred embodiment and accompanying drawings.

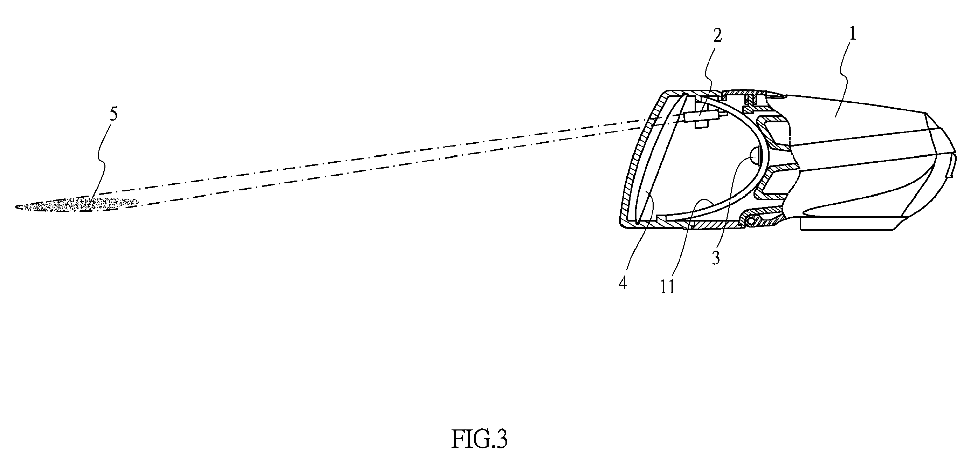

Please reference to FIG. 3, the present invention relates to an intelligent lighting device for a vehicle, such as bicycle. The intelligent lighting device mainly comprises a light body 1, a light collection unit 2, a lightening unit 3, and a light focusing glass 4.

A concave reflection cup 11 with an open end may be arranged at a front end of the light body 1. The light focusing glass 4 may be arranged at the open end of the cup 11. The lightening unit 3 may be arranged at an inner wall of a rear end of the cup 11 opposite to the open end. The light collection unit 2 may be disposed at the light body 1. A light projection area 5 disposed at a front end of the light body 1 may be defined by cooperating with the lightening unit 3 and the light focusing glass 4. And the light collection unit 2 is faced to the light projection area 5 and detected an ambient light brightness of the light projection area 5 (shown as in FIG. 3).

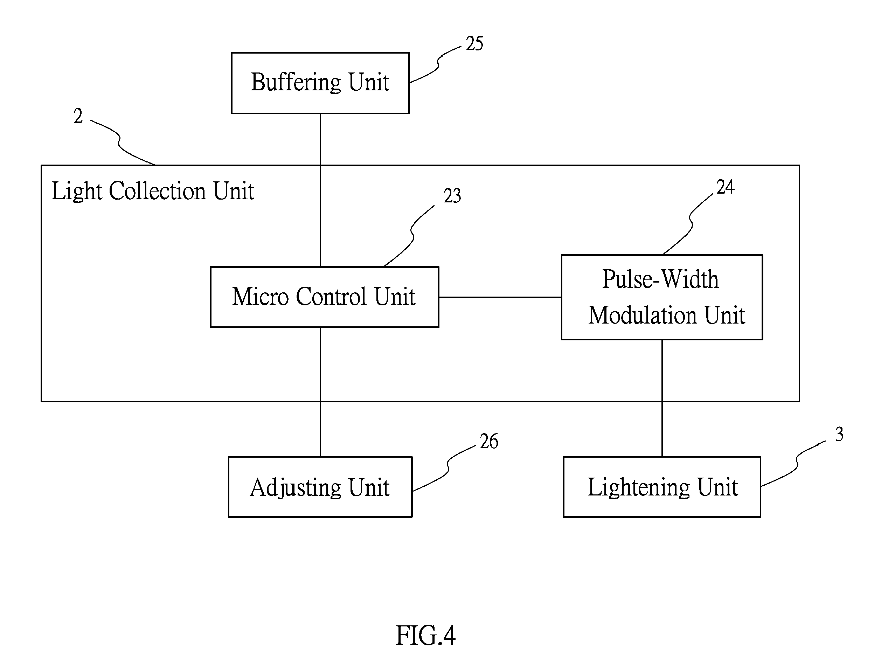

A micro control unit 23 and a pulse-width modulation unit 24 are further arranged at the light collection unit 2 (shown as in FIG. 4). The micro control unit (MCU) 23 has an predetermined ambient brightness and the pulse-width modulation unit (PWM) 24 is used to transfer an analog signal to a pulse. The period of the pulse is constant after transferring, but the duty cycle of the pulse is changed based on the analog signal and then the brightness of the lightening unit 3 is also changed. The voltage/current with ON/OFF repeating pulse sequence is installed to the analog load and then becomes totally ON (digital for one) or OFF (digital for zero).

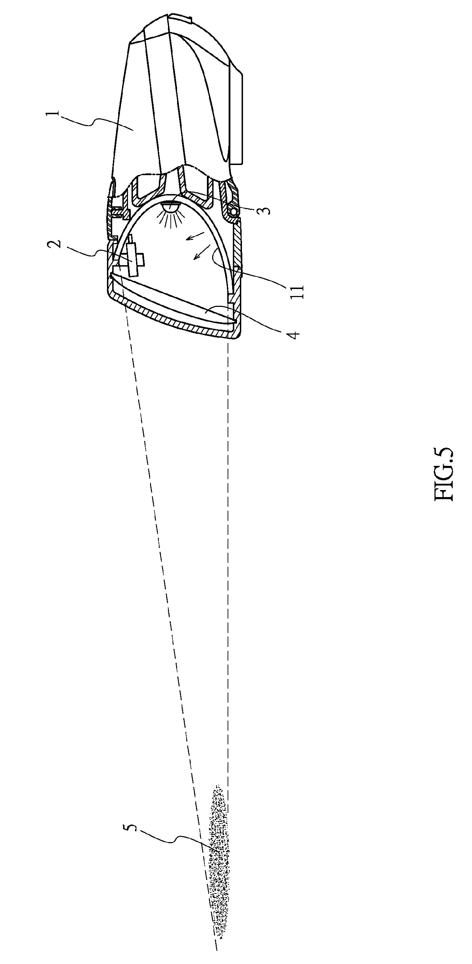

The light collection unit 2, the micro control unit 23, and the pulse-width modulation unit 24 may be electrically connected with one another. A difference of the ambient light brightness is calculated by comparing with a digital information received from the light collection unit 2 and the predetermined ambient light brightness by the micro control unit 23 and then the digital information is commanded to transmit to the pulse-width modulation unit 24 and modulate to increase or decrease the light brightness of the lightening unit 3 corresponding to the light projection area 5. An output current of the pulse-width modulation unit 24 is zero while the light collection unit 2 is collecting the ambient light brightness, even the lightening unit 3 is not lightened so that there is not any light brightness in the light body 1 and then the ambient light brightness of the light projection area 5 is accurately detected while the light collection unit 2 is collecting the ambient light brightness of the light projection area 5 (shown as in FIGs. 3 and 5).

A differential amplifier 21 and an analog-to-digital converter 22 are further arranged at the light collection unit 2 (shown as in FIG. 2). The ambient light brightness of the light projection area 5 may be detected by the differential amplifier 21 and then the detected information is transmitted to the analog-to-digital converter 22 after the detecting information is amplified. (The analog-to-digital converter is used for transferring an analog signal to a digital signal.) The analog-to-digital converter 22 is transferring the detected information with analog signals to digital signals and then the detected information with the digital signals is transmitted to the micro control unit 23 to calculate.

The light collection unit 2 may be a photosensitive semiconductor and may include the differential amplifier 21 and the lightening unit 3 to form an integral element with light emission, light receiving, and light signal amplifying.

Besides, the light body 1 may further include an adjusting unit 26 which is electrically connected to the micro control unit 23 and provides for manually adjusting the lightening effect of the lightening unit 3. The lightening unit 3 may be manually adjusted brightness by users to provide more comfortable illuminating effect.

The brightness of the lightening unit 3 corresponding to the difference is modulated by the pulse-width modulation unit 24 so as to increase or decrease the brightness based on the ambient brightness. The light intensity of the light projection area 5 is detected and amplified by the differential amplifier 21 due to the assembly and effect of the light collection unit 2, and then the difference between the predetermined ambient brightness and the ambient brightness of the light projection area 5 is transmitted and calculated by the analog-to-digital converter 22, the micro control unit 23 so as to command the lightening unit 3 to supplement the brightness corresponding to the difference or decrease the ambient brightness of the light projection area 5 through the pulse-width modulation unit 24 (the differential amplifier 21 and the analog-to-digital converter 22 may provide more accurate detection and calculation).

A buffering unit 25 may be further arranged at the light collection unit 2. A predetermined buffer value may be preset in the buffering unit 25. The lightening unit 3 is commanded not to modulate brightness through the micro control unit 23 and the pulse-width modulation unit 24 while a brightness modulation time of the light projection area 5 detected by the light collection unit 5 is smaller than the predetermined buffer value. It means that the light collection unit 2 commands the lightening unit 3 not to modulate the brightness to prevent from flashing while the ambient brightness of the light projection area 5 is flashing off in a short time.

There are some obvious and non-temporary brightness changes is judged by the buffering unit 25, the brightness modulation time and the brightness are integrally calculated by the buffering unit 25 and the micro control unit 23 and then the lightening unit 3 is commanded to modulate to increase or decrease the brightness through the micro control unit 23 and the pulse-width modulation unit 24 while the brightness modulation time of the light projection area 5 detected by the light collection unit 2 is larger than the predetermined buffer value.

There are many characteristics of this invention.

Firstly, the ambient brightness of the light projection area 5 is detected by the light collection unit 2, and then the difference between the predetermined ambient brightness and the detected information so as to command the lightening unit 3 to supplement or decrease the ambient brightness of the light projection area 5. Especially, the output current of the pulse-width modulation unit 24 is zero (the lightening unit 3 is not lightened) while the light collection unit 2 is receiving the ambient brightness of the light projection area 5. The ambient brightness of the light projection area 5 may be accurately detected due to no brightness in the light body 1 while the light collection unit 2 is receiving the ambient brightness and then the brightness of the light body 1 may be adjusted based on the brightness of the light projection area 5 to accurately fill light.

Secondly, the power supply arranged in the light body 1 may be designed suitable capacity and volume due to the characteristic of adjusting the brightness of the light body 1 based on the brightness of the light projection area 5. The volume of the power supply (such as batteries) is decreased and further the volume and weight of the light body 1 are also decreased. In addition, compared to the prior art, the battery life may be extended.

Thirdly, the brightness is not immediately supplemented or decreased by the lightening unit 3 due to the arrangement of the buffering unit 25 while the light is flashed off in the light projection area 5 to prevent from unwanted flash. The users will not be persecuted by rapidly flashing. It may provide stable lighting in an ideal visual range while the flash in the light projection area 5 is confirmed by the buffering unit 25 to be stably and surely changed.

Fourthly, vehicles in the urban district or suburban district need different illumination due to sufficient light in the urban district with many street lights and insufficient light in the suburban district with low density of distribution of street lights. Lower illumination is needed in the urban district and higher illumination is needed in the suburban district based on the detection of the light projection area 5 with the light collection unit 2 while the intelligent lighting device of this invention is applied.

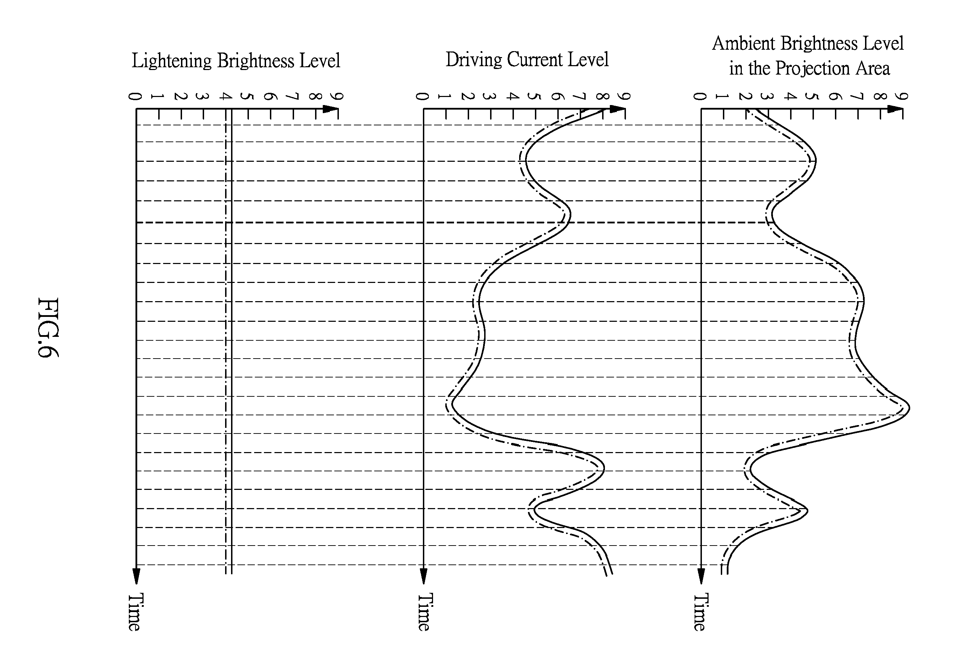

FIG. 6 is curve diagrams of the intelligent lighting device for a vehicle of the present invention referred to ambient brightness level in the light projection area-time, driving current level-time, and lightening brightness level in the light projection area-time. The ambient brightness level in the projection area means that the brightness is provided from the environment to the light projection area. The driving current level means that a driving current is generated from an electromechanical system corresponding to the brightness while the intelligent lighting device of this invention is applied to the electromechanical system. The lightening brightness level means a sum of the light projected from the light projection area and the ambient brightness. In FIG. 6, the brightness (light) should be filled much higher by the lightening unit 3 and the driving current is also increased while the ambient brightness level in the light projection area 5 is lower. The total brightness is always kept predetermined constant and all values are close to actual values after the ambient brightness in the light projection area 5 is filled light (brightness).

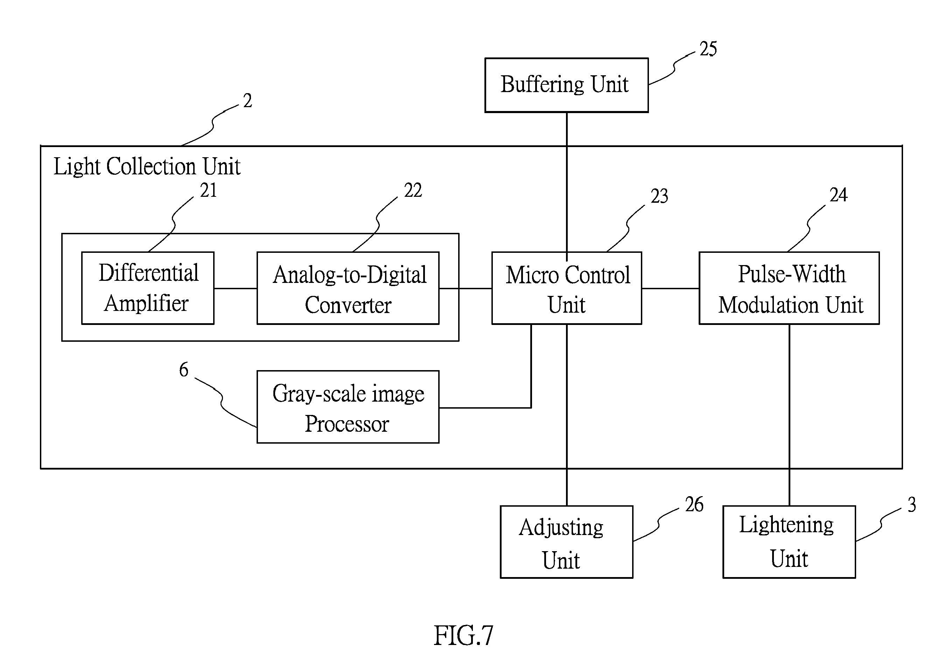

Please reference to FIG. 7, another embodiment of this invention mainly shows that a gray-scale image processor 6 and the micro control unit 23 electrically connected with each other are arranged at the light collection unit 2 so that an image of the light projection area 5 is transferred to a gray-scale value for providing the micro control unit 23 to judge a brightness or an image of the gray-scale value and further modulating a light brightness of the lightening unit 3.

The foregoing descriptions are merely the exemplified embodiments of the present invention, where the scope of the claim of the present invention is not intended to be limited by the embodiments. Any equivalent embodiments or modifications without departing from the spirit and scope of the present invention are therefore intended to be embraced.

The disclosed structure of the invention has not appeared in the prior art and features efficacy better than the prior structure which is construed to be a novel and creative invention, thereby filing the present application herein subject to the patent law.

## Claims

1. An intelligent lighting device for a vehicle, comprising a light body, a light collection unit, a lightening unit, and light focusing glass, wherein:
a concave reflection cup with an open end is arranged at a front end of the light body, the light focusing glass is arranged at the open end of the cup, the lightening unit is arranged at an inner wall of a rear end of the cup opposite to the open end, the light collection unit is disposed at the light body, a light projection area disposed at the front end of the light body is defined by cooperating with the lightening unit and the light focusing glass, and the light collection unit is faced to the light projection area and detected an ambient light brightness of the light projection area;
a micro control unit and a pulse-width modulation unit are further arranged at the light collection unit and electrically connected with one another, a difference of the ambient light brightness is calculated by comparing with a digital information received from the light collection unit and a predetermined ambient light brightness by the micro control unit and then the digital information is commanded to transmit to the pulse-width modulation unit and modulate to increase or decrease the light brightness of the lightening unit corresponding to the light projection area; and
an output current of the pulse-width modulation unit is zero while the light collection unit is collecting the ambient light brightness, even the lightening unit is not lightened, so that there is not any light brightness in the light body and then the ambient light brightness of the light projection area is accurately detected while the light collection unit is collecting the ambient light brightness of the light projection area.

2. The intelligent lighting device as claimed in claim 1, wherein a differential amplifier and an analog-to-digital converter are further arranged at the light collection unit, the ambient light brightness of the light projection area is detected by the differential amplifier to transfer to a detecting information and transmitted to the analog-to-digital converter after the detecting information is amplified, the detecting information is converted from analog to digital by the analog-to-digital converter and transmitted to the micro control unit so that the difference of the ambient light brightness is calculated by comparing with the digital information received from the light collection unit and the predetermined ambient light brightness by the micro control unit and provided more accurate detection and calculation.

3. The intelligent lighting device as claimed in claim 1, wherein a buffering unit is further arranged at the light collection unit, a predetermined buffer value is preset in the buffering unit, and the lightening unit is commanded not to modulate brightness through the micro control unit and the pulse-width modulation unit while a brightness modulation time of the light projection area detected by the light collection unit is smaller than the predetermined buffer value; and
the brightness modulation time and the brightness are integrally calculated by the buffering unit and the micro control unit, and then the lightening unit is commanded to modulate to increase or decrease the brightness through the micro control unit and the pulse-width modulation unit while the brightness modulation time of the light projection area detected by the light collection unit is larger than the predetermined buffer value.

4. The intelligent lighting device as claimed in claim 1, wherein the light collection unit is arranged at the reflection cup.

5. The intelligent lighting device as claimed in claim 1, wherein the light collection unit is a photosensitive semiconductor.

6. An intelligent lighting device for a vehicle, comprising a light body, a light collection unit, a lightening unit, and light focusing glass, wherein:
a concave reflection cup with an open end is arranged at a front end of the light body, the light focusing glass is arranged at the open end of the cup, the lightening unit is arranged at an inner wall of a rear end of the cup opposite to the open end, the light collection unit is disposed at the light body, a light projection area disposed at the front end of the light body is defined by cooperating with the lightening unit and the light focusing glass, and the light collection unit is faced to the light projection area and detected an ambient light brightness of the light projection area; and
a gray-scale image processor and a micro control unit electrically connected with each other are arranged at the light collection unit so that an image of the light projection area is transferred to a gray-scale value for providing the micro control unit to judge a brightness or an image of the gray-scale value and further modulating a light brightness of the lightening unit.
